# EUROPEAN PATENT APPLICATION

(11) **EP 4 242 919 A1**
(43) Date of publication of application: **13.09.2023**
(21) Application number: 22160416.8
(22) Date of filing: 07.03.2022
(51) Int. Cl.: G06N 3/04, G06N 3/063, G06T 1/20, G01N 21/88, G06N 3/08

(54) **EFFICIENT DEEP LEARNING INFERENCE OF A NEURAL NETWORK FOR LINE CAMERA DATA**

(71) Applicant: Siemens Aktiengesellschaft, 80333 München (DE)
(72) Inventor: Gigler, Alexander Michael, 86836 Untermeitingen (DE); Thon, Ingo, 85630 Grasbrunn (DE)
(74) Representative: Siemens Patent Attorneys

(57) **Abstract**

The invention discloses an automated method for accelerating deep learning inference of a neural network with layers, whereby a line-wise image consisting of pixels is generated by a line-camera (1) scanning an object (3), characterized by:
for each new pixel-line added to the image,
results of previously calculations for pixels of the current layer are used instead of repeated calculations to calculate the value of a pixel in the next layer.

A corresponding arrangement comprising a neural network is disclosed as well.

## Description

### FIELD OF THE INVENTION

The present invention relates to an automated method and computational device for accelerating deep learning inference of a neural network with layers, whereby a line-wise image consisting of pixels is generated by a line-camera scanning an object, e.g., a manufactured part in a factory.

### BACKGROUND OF THE INVENTION

Deep learning inference is the process of using a trained DNN model to make predictions against previously unseen data.

Optical Inspection with Artificial Intelligence is an emerging topic in industrial automation. Algorithms and hardware for efficient inference exist in the context of rectangular (Area scan) field of interest / region of interest. The efficient hardware for inference with a low thermal design power plays a crucial role in industrial automation, whether it is IPCs or specialized hardware for inference like the SIMATIC TM NPU of Siemens AG. Accelerator chips for Industrial Personal Computers are for example Google's Coral or Intel's Myriad or Movidius.

Nevertheless, most accelerators with low thermal design power have been developed for mobile applications like in cell phones where lower resolution images are sufficient, e.g., to detect faces. Typically, such image resolutions are in the range from 32x32 pixel up to a typical maximum of 1024 x 768 pixels.

However, in industrial applications much higher resolutions are necessary to fulfill the intended task. This is especially true in the context of continuous production, e.g., in steel production, inspection of fabric, inspection of paper and printing products, or when objects are transported on a conveyor belt and should be analyzed continuously without stopping the conveyor. In the latter case, the predominant image sensor is a so-called line camera.

A line camera does not acquire single rectangular images but generates a constant stream of vectors (dimensionality: spatial resolution of the line-scan x color bands: greyscale: 1 or RGB: 3), on a wide but extremely narrow sensor. Typical resolutions are from 2048 x 1 px up to 12288 x 3 px. However, the line frequency can easily go up to 50khz. Hence, a line camera of 2048 x 1 px and a line frequency of 1 kHz generates an image of 2048 x 1000 px per second. For product and quality inspection tasks such high resolutions are necessary.

Evaluating such high resolutions with the (accelerator) chip-sets for the mobile market is impossible according to state of the art.

In modern applications utilizing Hyper-Spectral-Imaging (HSI) cameras, the problem becomes even worse as these cameras do not only generate three colors (RGB) but have a much higher wavelength resolution in terms of the colors of the light, i.e., spectral features or bands. Spectrally, this can be used in the visible range, but also in the more interesting near or mid-infrared range where the data can be correlated with the chemical composition or physical properties of the sample. Due to the higher spectral resolution and increased information content, better detection / contrasting of structures is achieved. In the mid- and far-infrared range even highly specific chemical sensing is possible due to the sharp spectral features there, yet, coming at much higher prices.

The state of the art is to aggregate the pixels measured individually into a single rectangular image. Thus, the stream to be evaluated by the artificial intelligence is put into rectangular chunks. This either requires large strides (skipping over parts of the inference task), risking loosening information or using extremely expansive GPUs for inference.

### SUMMARY OF THE INVENTION

The objective of the present invention is to provide a solution for improving deep learning inference of optical inspections in the field of industrial automation.

To accomplish the objective, the present invention provides a solution according to the independent claims. Advantageous embodiments are provided in the dependent claims.

The invention discloses an automated method for accelerating deep learning inference of a neural network with layers, whereby a line-wise image consisting of pixels is generated by a line-camera scanning an object, whereby:
for each new pixel-line added to the image, results of previously calculations for pixels of the current layer are used instead of repeated calculations to calculate the value of a pixel in the next layer.

The advantage of the invention is that customers can utilize more complex imagery in less expansive hardware. The savings for the customer comes from the fact that there is no need for expansive computer graphics cards for inference. These benefits can be either be monetarized directly or utilized to improve the attractiveness of programmable logic controllers.

In a further embodiment of the method the neural network is a convolutional neural network, and the pixels of the layers are calculated by convolution using a convolutional kernel.

The independent claim 1 together with the first embodiment reads as follows:
Automated method for accelerating deep learning inference of a convolutional neural network, whereby a line-wise image consisting of pixels is generated by a line-camera scanning an object, whereby for each new pixel-line added to the image, calculating the convolution of the layers by a convolutional kernel results of previously calculations for pixels of the current layer are used instead of repeated calculations to calculate the value of a pixel in the next layer.

In a further embodiment of the method for each layer:
- a first-in-first-out buffer with the size of the vertical resolution of the layer is initialized,
- for initialization, putting the next line of the image in the buffer until the horizontal resolution of the convolutional kernel minus the figure one is reached,
whereby for each line in the layer:
- adding the line to the buffer,
- calculating the convolution on the content of the buffer, whereby previously calculated values are stored for the next line, and
- providing the calculated convolution on the content to the next layer.

In a further embodiment of the method the object is a part processed in a production process in a factory.

In a further embodiment of the method the line-camera is set-up in a production line.

In a further embodiment of the method the neural network's stride is set to a whole integer greater one, therefor in one iteration step multiple lines from the input calculate only one output. In result, the number of buffers is significantly reduced.

In a further embodiment of the method the method is performed for every color channel of the line-camera.

The invention further discloses an arrangement for accelerating deep learning inference, comprising a neural network with layers and line-camera scanning an object, whereby the line-camera is designed to generate a line-wise image consisting of pixels. The arrangement is characterized by a computational device designed and programmed to be applied to every new pixel-line added to the image. This is resulting in previous calculations for pixels of the current layer instead of repeated calculations to calculate the value of a pixel in the next layer.

In a further embodiment of the arrangement the neural network is a convolutional neural network, and
the computational device is designed to calculate the pixels of the layers by convolution using a convolutional kernel.

In a further embodiment of the arrangement the computational device is designed to carry out the steps of the method according to the invention.

In a further embodiment of the arrangement the object is a part processed in a production process in a factory.

In a further embodiment of the arrangement the line-camera is set-up in a production line.

In a further embodiment of the arrangement the neural network's stride is set to a whole integer greater one, therefor in one iteration step multiple lines from the input calculate only one output.

Further benefits and advantages of the present invention will become apparent after a careful reading of the detailed description with appropriate reference to the accompanying drawings.

### BRIEF DESCRIPTION OF THE DRAWINGS

- FIG. 1: shows an illustration of calculation of one single output pixel,
- FIG. 2: shows an illustration of the calculation for two different channels,
- FIG. 3: shows a two-layer architecture,
- FIG. 4: shows the reduction of buffer compacity, and
- FIG. 5: shows a block diagram of the arrangement.

### DETAILED DESCRIPTION

The invention is exemplarily explained by an embodiment using a convolutional deep neural network and how the convolutional deep neural network - the core of modern AI - calculates its results. A convolutional deep neural network is built up from various so-called convolutional layers.

Each convolutional layer contains a series of filters known as convolutional kernels. A convolutional kernel is a simple but efficient mathematical formulation. The kernel is a matrix of integers that are used on a subset of the input pixel values, the same size as the kernel. Each pixel is multiplied by the corresponding value in the kernel, then the result is summed up for a single value for simplicity representing a grid cell, like a pixel, in the output channel/feature map.

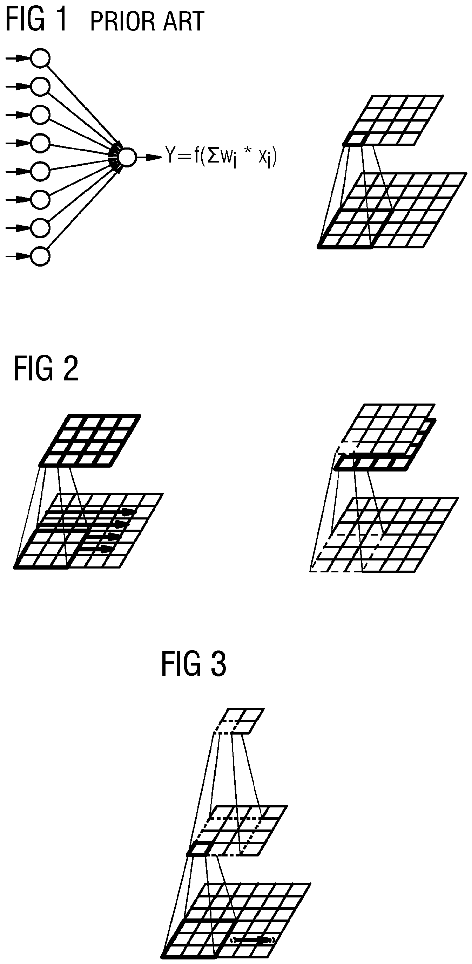

As an example, a 3 x 3 convolutional kernel takes a patch of 3 x 3 pixels from the input and calculates one value for the output layer. The image of FIG. 1 illustrates the calculation of one single output pixel (see right side, top patch) from a 3 x 3 patch in the input (see right side, bottom patch). In the left diagram, the mathematical calculation, where the 9 pixels from the input xᵢ multiplied by a weight vector wᵢ, is depicted. The weight vector wᵢ is determined by the training / learning procedure of the deep neural network.

This calculation is repeated for each patch of the input data (next image, left side of FIG. 1) and often multiple times for various weight vectors (next image, right side of FIG. 1) when performing the calculation for different channels as shown in FIG. 2 for two channels (e.g., two colors). In the input based on image data, there are typically three channels for the colors red, green, and blue, while in hyperspectral imaging (HSI) application around 256 channels constitute the input data.

This generates a notable amount of calculation on the input data and following in all subsequent convolutional layers of the deep neural network. In applications with line cameras patching/scanning the images the calculations are repeated multiple times.

The core of the invention is to automatically extend the line-wise nature of the line-camera to the inference calculation in the deep neural network. Instead of patching the input image in repeated image parts, the previous calculations are either contained/implemented in the software or in the inference model, where the latter approach is supposedly much more efficient.

For illustrative purposes consider a two-layer architecture according to FIG. 3. For inference, the network needs to execute in the first layer 4 x 4 calculations and in the next layer it needs to calculate 2 x 2 calculations. Hence, the intended algorithm works as follows for each layer:
1.) Initialize a first-in-first-out buffer (= buffer unit) with the size of the vertical resolution of the layer.
2.) For initialization, put the next line in the buffer until the horizontal (= direction of the feed motion) resolution - 1 of the convolutional kernel is reached.
3.) For each line
   a. add the line to the buffer
   b. calculate the convolution on the content of the buffer, whereby previously calculated values are stored for the next line,
   c. provide the content (calculated convolution) to the next layer.

This algorithm can be implemented extremely efficient *in-silico* when implemented in computational memory.

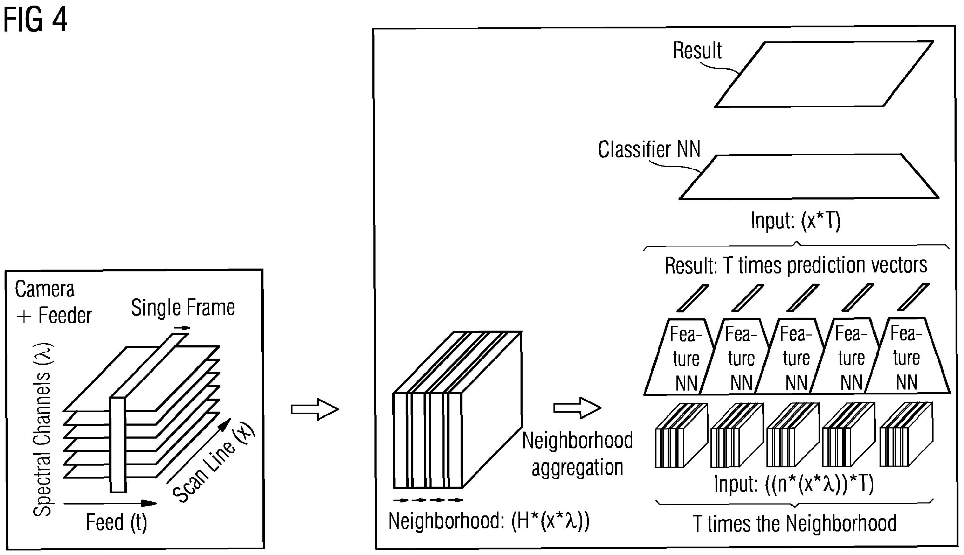

The method so far shifts the effort from computations to memory due to the ring buffers. This gets, however, critical when the number of channels, e.g., in HSI applications increases. Therefore, in addition to the inference the invention aims at saving buffers in inference by utilizing Neural Architecture search training a so-called super-network. The super-network as shown in FIG. 4 contains options for large strides in vertical direction in the input. A stride consumes in one iteration not a single line but multiple lines from the input (four neighborhood lines in FIG. 4) and calculates only one output. In result, the number of buffers collapses significantly as indicated in FIG. 4 by the frustums.

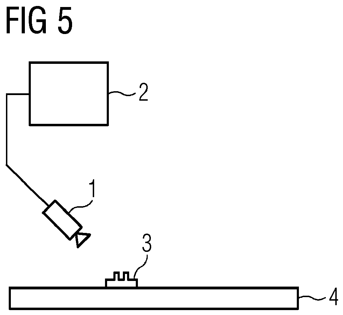

FIG. 5 shows a block diagram of the arrangement. An object 3 is processed in a production line 4 and inspected by a line-camera 1. The images of the line-camera 1 are processed in the computational device 2 which comprises the deep neural network performing the inference.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. An automated method for accelerating deep learning inference of a neural network with layers, whereby a line-wise image consisting of pixels is generated by a line-camera (1) scanning an object (3), **characterized by**:
for each new pixel-line added to the image,
results of previously calculations for pixels of the current layer are used instead of repeated calculations to calculate the value of a pixel in the next layer.

2. The automated method according to claim 1, whereby the neural network is a convolutional neural network, and the pixels of the layers are calculated by convolution using a convolutional kernel.

3. The automated method according to claim 2, whereby for each layer:
- initializing a first-in-first-out buffer unit (2.1) with the size of the vertical resolution of the layer,
- for initialization, putting the next line of the image in the buffer unit (2.1) until the horizontal resolution of the convolutional kernel minus the figure one is reached,
whereby for each line in the layer:
- adding the line to the buffer unit (2.1),
- calculating the convolution on the content of the buffer unit (2.1), whereby previously calculated values are stored for the next line, and
- providing the calculated convolution on the content to the next layer.

4. The method according to one of the previous claims, whereby
the object (3) is a part processed in a production process in a factory.

5. The method according to one of the previous claims, whereby
the line-camera (1) is set-up in a production line (4).

6. The method according to one of the previous claims, whereby
the neural network's stride is set to a whole integer greater one, therefor in one iteration step multiple lines from the input calculate only one output.

7. The method according to one of the previous claims, whereby
the method is performed for every color channel of the line-camera (1).

8. An arrangement for accelerating deep learning inference, comprising a neural network with layers and a line-camera (1) scanning an object (3), whereby the line-camera (1) is designed to generate a line-wise image consisting of pixels; **characterized by**:
a computational device (2) comprising the neural network, designed, and programmed to use for each new pixel-line added to the image results of previously calculations for pixels of the current layer instead of repeated calculations to calculate the value of a pixel in the next layer.

9. The arrangement of claim 8, whereby
the neural network is a convolutional neural network, and the computational device (2) is designed to calculate the pixels of the layers by convolution using a convolutional kernel.

10. The arrangement of claim 8 or 9, whereby
the computational device (2) is designed to carry out the steps of claim 3.

11. The method according to one of the claims 8 to 10, whereby
the object (3) is a part processed in a production process in a factory.

12. The method according to one of the claims 8 to 11, whereby
the line-camera (1) is set-up in a production line (4).

13. The method according to one of the claims 8 to 12, whereby
the neural network's stride is set to a whole integer greater one, therefor in one iteration step multiple lines from the input calculate only one output.
